# EUROPEAN PATENT APPLICATION

(11) **EP 3 725 148 A1**
(43) Date of publication of application: **21.10.2020**
(21) Application number: 19775639.8
(22) Date of filing: 12.02.2019
(51) Int. Cl.: A01D 46/24, A01D 46/30

(54) **FRUIT AND VEGETABLE HARVESTING DEVICE**

(30) Priority: 28.03.2018 JP 2018063252
(71) Applicant: HONDA MOTOR CO., LTD., Minato-ku Tokyo 107-8556 (JP)
(72) Inventor: TAKEMURA, Yoshinari, Wako-shi, Saitama 351-0193 (JP); MISUMI, Takeshi, Wako-shi, Saitama 351-0193 (JP); YOKOYAMA, Taro, Wako-shi, Saitama 351-0193 (JP); YOKOBAYASHI, Hiroshi, Wako-shi, Saitama 351-0193 (JP)
(74) Representative: Feller, Frank
(86) International application number: PCT/JP2019/004907
(87) International publication number: WO 2019/187714

(57) **Abstract**

Provided is a fruit and vegetable harvesting device (10) for harvesting a fruit or vegetable (1) connected to a branch (3) via a pedicel (2). The fruit and vegetable harvesting device (10) includes: a harvesting hand (11) including a holding unit (12) having a suction pad (15) for holding the fruit or vegetable (1) and a finger unit (21) that can abut on the pedicel (2); and a robot arm (31) that turns the harvesting hand (11) to cause the finger unit (21) abutting on the pedicel (2) to press the pedicel (2).

## Description

### Technical Field

The present invention relates to a fruit and vegetable harvesting device for harvesting fruits or vegetables connected to branches via pedicels.

### Background Art

Manually harvesting fruits and vegetables, such as apples and tomatoes, takes considerable effort in separating them from branches. For reducing such a burden, fruit and vegetable harvesting devices which hold and harvest fruits and vegetables have been known (see Patent Literature 1, for example).

### Citation List

### Patent Literature

Patent Literature 1: Japanese Patent Laid-Open No. 63-137614

### Summary of Invention

### Technical Problem

The fruit and vegetable harvesting device disclosed in Patent Literature 1 includes an arm, a suction tube turnably provided to the arm, and a sucking pad provided at the distal end of the suction tube. In harvesting a fruit or vegetable, the suction tube turns while the fruit or vegetable to be harvested is sucked and held by the sucking pad, so that the fruit or vegetable is turned to break the joint portion of the branch, and then the fruit or vegetable is harvested.

It is, however, difficult to separate the fruit or vegetable by just holding and turning the fruit or vegetable as in the case of the fruit and vegetable harvesting device of Patent Literature 1. Thus, the branch may be so moved as to cause another fruit or vegetable of the same branch to hit another branch, the branch may be damaged, and a calyx may come off in the case of some fruits and vegetables, such as tomatoes, leading to degradation in salability of the fruit or vegetable.

In view of the above circumstances, an object of the present invention is to provide a fruit and vegetable harvesting device which can readily remove a fruit or vegetable from a branch with a light burden on the fruit or vegetable and the branch (main stem) without damaging the fruit or vegetable.

### Solution to Problem

[1] In order to achieve the object described above, a fruit and vegetable harvesting device according to the present invention for harvesting a fruit or vegetable formed at a distal end of a pedicel includes:
a harvesting hand including a hand base, a holding unit that holds the fruit or vegetable, and a finger unit that abuts on the pedicel, the holding unit and the finger unit being supported by the hand base; and
a turning mechanism that turns the harvesting hand to cause the finger unit abutting on the pedicel to press the pedicel.

According to the present invention, the harvesting hand turns while the holding unit holds the fruit or vegetable and the finger unit abuts on the pedicel to cause the finger unit to press the pedicel. The finger unit supports the pedicel while the fruit or vegetable turns along with the turning of the harvesting hand and thus the finger unit is readily pressed onto the pedicel, which facilitates removal of the fruit or vegetable from the branch with the finger unit acting as a fulcrum. Accordingly, the fruit or vegetable can be harvested with a light burden on the fruit or vegetable and the branch (main stem) without damaging the fruit or vegetable.

[2] According to the present invention, the harvesting hand preferably includes a movable unit that causes the finger unit to move along the fruit or vegetable and abut on the pedicel.

With this configuration, the movable unit causes the finger unit to move along the fruit or vegetable and abut on the pedicel even if the fruit or vegetable is affected by any disturbance, such as a change in external environment including a shake of the branch, which can increase so-called robustness.

[3] According to the present invention, the fruit and vegetable harvesting device preferably includes a sensor that detects holding of the fruit or vegetable and abutment on the pedicel, and
the turning mechanism preferably turns the harvesting hand in response to detection of the holding and the abutment.

With this configuration, the sensor detects holding of the fruit or vegetable and abutment on the pedicel, so that the harvesting hand can turn upon the holding and abutment.

[4] According to the present invention, the fruit and vegetable harvesting device preferably includes:
a movement mechanism for moving the harvesting hand;
a recognition device that recognizes a fruit or vegetable around the harvesting hand; and
a control unit that causes the movement mechanism to move the harvesting hand toward the fruit or vegetable recognized by the recognition device, causes the holding unit to hold the recognized fruit or vegetable, causes the finger unit to abut on the pedicel, and causes the turning mechanism to turn the harvesting hand while keeping the abutment to separate the fruit or vegetable from a branch.

With this configuration, the recognition device recognizes the position of the fruit or vegetable including the pedicel, and the control unit causes the movement mechanism to move the harvesting hand toward the fruit or vegetable recognized by the recognition device, causes the holding unit to hold the recognized fruit or vegetable, causes the finger unit to abut on the pedicel, and causes the turning mechanism to turn the harvesting hand while keeping the abutment to separate the fruit or vegetable from a branch. Thus, an operator does not need to move the harvesting hand to a position where the harvesting hand can hold the fruit or vegetable, so that a burden on the operator can be reduced.

[5] According to the present invention, the control unit preferably recognizes a bending direction of the pedicel at an abscission zone of the pedicel by way of the recognition device and controls the movement mechanism to cause the finger unit to abut on the pedicel in a direction opposite to the bending direction.

With this configuration, the recognition device recognizes the bending direction of the pedicel and the finger unit is caused to abut on the pedicel in the direction opposite to the bending direction. This makes it easy to break the pedicel, which facilitates separating the fruit or vegetable from the branch.

### Brief Description of Drawings

FIG. 1 is an explanatory view of a fruit and vegetable harvesting device according to the present invention.
FIG. 2 is a block diagram of the fruit and vegetable harvesting device according to the present invention.
FIG. 3 is an action diagram of the fruit and vegetable harvesting device according to the present invention.
FIG. 4 is an explanatory view of another embodiment of a main section of the fruit and vegetable harvesting device illustrated in FIG. 1.

### Description of Embodiment

A fruit and vegetable harvesting device 10 according to an embodiment of the present invention will be described with reference to the drawings. As illustrated in FIG.s 1 and 2, the fruit and vegetable harvesting device 10 according to the embodiment of the present invention is used to harvest a fruit or vegetable 1 connected to a branch 3 via a pedicel 2. The fruit or vegetable 1 is a tomato, for example, and the pedicel 2 includes an abscission zone 4 having an abscission layer, which is an easy-to-cut portion.

The fruit and vegetable harvesting device 10 includes: a harvesting hand 11 including a holding unit 12 for holding the fruit or vegetable 1, a finger unit 21 that can abut on the pedicel 2, and a hand base 13 for supporting the holding unit 12 and the finger unit 21; a movement mechanism 41 for moving the harvesting hand 11; a recognition device 51 that recognizes a fruit or vegetable 1 around the harvesting hand 11; and a control unit 61 for controlling operations of the harvesting hand 11 and the movement mechanism 41 on the basis of images from the recognition device 51 or in response to an operation by an operator.

The holding unit 12 includes a support plate 14 provided at the distal end of the hand base 13, a suction pad 15 provided on the support plate 14, a flexible suction tube 16 connected to the suction pad 15, and a suction pump 17 connected to the suction tube 16 to perform suction.

The harvesting hand 11 includes a movable unit 22 which causes the finger unit 21 to move along the fruit or vegetable 1 and abut on the pedicel 2. The movable unit 22 is provided in the hand base 13 slidably in the longitudinal direction of the hand base 13, and its sliding direction and sliding amount are controllable via a stepping motor 22a or the like.

The finger unit 21 is pivotally provided to the movable unit 22 via a pivot shaft (not illustrated), and includes a lock mechanism 23 provided at the pivot shaft to lock the pivoting of the finger unit 21, opposing right and left guide rollers 24 rotatably provided at the distal end each having a guide surface inclined toward the center, and an abutting part 25 to abut on a pedicel 2 between the right and left guide rollers. The lock mechanism 23 includes a finger unit lock switch 23a which locks or unlock the finger unit 21 in response to a signal from the control unit 61.

The fruit and vegetable harvesting device 10 further includes a sensor (not illustrated) for detecting holding of a fruit or vegetable, and a sensor (not illustrated) for detecting abutment on a pedicel.

The movement mechanism 41 includes a self-propelled vehicle 42 and a robot arm 31. The robot arm 31 is vertically articulated, and has three links for a first arm 32, a second arm 33, and a wrist 34, and one end of the first arm 32 is swingably mounded to a pedestal 35 via a first joint 36. The other end of the first arm 32 is connected to one end of the second arm 33 via a second joint 37, and the second arm 33 is swingable relative to the first arm 32. The wrist 34 is swingably connected to the other end of the second arm 33 via a third joint 38, and can rotate about its longitudinal axis by means of a revolving mechanism (not illustrated) provided inside. The pedestal 35 can rotate relative to the vehicle 42 by means of a revolving mechanism (not illustrated) inside the pedestal. That is, the robot arm 31 has five degrees of freedom.

The harvesting hand 11 is attached to the wrist 34 of the robot arm 31 to serve as an end effector. In harvesting a fruit or vegetable 1, the respective joints and revolving mechanisms of the robot arm 31 operate so that the harvesting hand 11 holding the fruit or vegetable 1 turns the holding unit 12 in the direction of the finger unit 21 abutting on the pedicel 2. According to the embodiment, the robot arm 31 is one of the components of the movement mechanism 41, and corresponds to a turning mechanism for turning the harvesting hand 11.
The respective joints and revolving mechanisms of the robot arm 31 each include a driving motor 39 for driving the same, and traveling devices 48 provided to the vehicle 42 each include a traveling motor 49 for driving the travel.

The recognition device 51 is a camera and supported by the movement mechanism 41 via a support member 52. An image captured by the camera, which serves as the recognition device 51, is sent to the control unit 61 where the control unit 61 analyses the image and recognizes the position and posture of the fruit or vegetable 1 and pedicel.

The suction pump 17 and the control unit 61 are placed on the vehicle 42. The fruit and vegetable harvesting device 10 has respective units fully automated under control of the control unit 61.

The fruit and vegetable harvesting device 10 will be described below with reference to a block diagram.

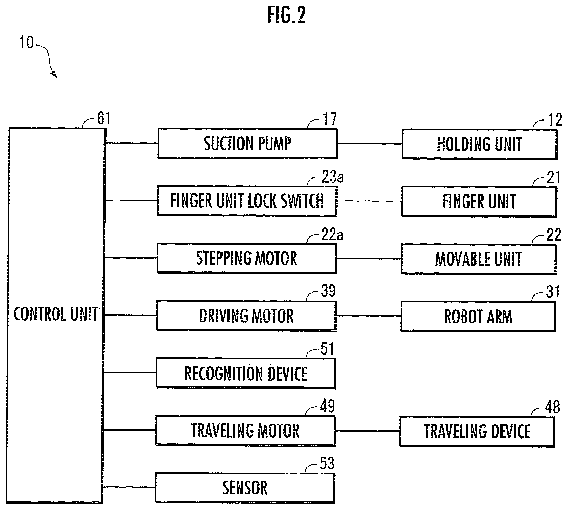

As illustrated in FIG. 2, the control unit 61 of the fruit and vegetable harvesting device 10 includes: the suction pump 17 which causes suction through the holding unit 12; the finger unit lock switch 23a of the lock mechanism 23 for locking the pivoting of the finger unit 21; the stepping motor 22a for advancing or retracting the movable unit 22; the driving motor 39 for driving the respective joints and revolving mechanisms of the robot arm 31; the camera serving as the recognition device 51; the traveling motors 49 of the vehicle 42; and a sensor 53 composed of the sensor for detecting holding of a fruit or vegetable 1 and the sensor for detecting abutment on a pedicel 2. The sensor 53 may be configured to detect abutment of the abutting part 25 on a fruit or vegetable.

The control unit 61 controls the respective components in the following manner. That is, the control unit 61 causes the movement mechanism 41 to move the harvesting hand 11 toward a recognized fruit or vegetable 1 and causes the holding unit 12 to hold the recognized fruit or vegetable 1, and confirms holding of the fruit or vegetable 1 on the basis of a signal of holding from the sensor for detecting the holding. The control unit 61 also causes the finger unit 21 to abut on the pedicel 2, and confirms abutment on the pedicel on the basis of a signal of abutment from the sensor for detecting the abutment. Then, the control unit 61 causes the robot arm 31 to turn the harvesting hand 11 to separate the fruit or vegetable 1 from a branch 3.

Specifically, the control unit 61 analyzes an image captured by the recognition device 51 in a processing section of the control unit 61 to recognize the position and posture of the fruit or vegetable 1 and the pedicel 2. The control unit 61 controls the traveling motors 49 and/or the respective driving motors 39 to move the suction pad 15 to a designated position according to a program or coordinate values preliminary input in an arithmetic section of the control unit 61, such as a position in the vicinity of a tomato, which is an example of the fruit or vegetable 1. The control unit 61 then causes the suction pad 15 to suck and hold the fruit or vegetable 1, and confirms the holding of the fruit or vegetable 1 on the basis of a signal from the sensor for detecting the holding of the fruit or vegetable 1. The control unit 61 further controls the stepping motor 22a to turn the movable unit 22 into a movable state to bring the finger unit 21 into abutment on the pedicel 2, and confirms the abutment of the finger unit 21 on the pedicel 2 on the basis of a signal from the sensor for detecting the abutment on the pedicel 2. The control unit 61 further controls the driving motor 39 to change the posture of the robot arm 31 to turn the harvesting hand 11.

Examples of the sensor for detecting holding of the fruit or vegetable 1 include a pressure sensor connected to the suction tube 16, the suction pump 17 or the like, a proximity sensor provided to the hand base 13, the support plate 14, and the like, and any sensor that can detect holding of the fruit or vegetable 1 may be used. Examples of the sensor for detecting abutment on the pedicel 2 include a pressure sensor such as a load cell, a proximity sensor provided to the finger unit 21, and the like, and any sensor that can detect abutment on the pedicel 2 may be used. Alternatively, holding of the fruit or vegetable 1 by the suction pad 15 and abutment on the pedicel 2 by the finger unit 21 may be detected through image analysis by the recognition device 51.

Actions of the above fruit and vegetable harvesting device 10 will be described next.

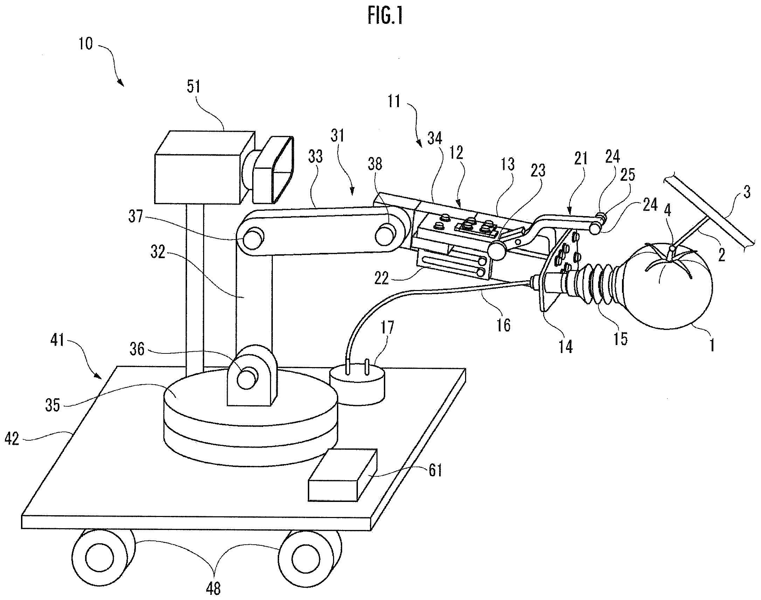

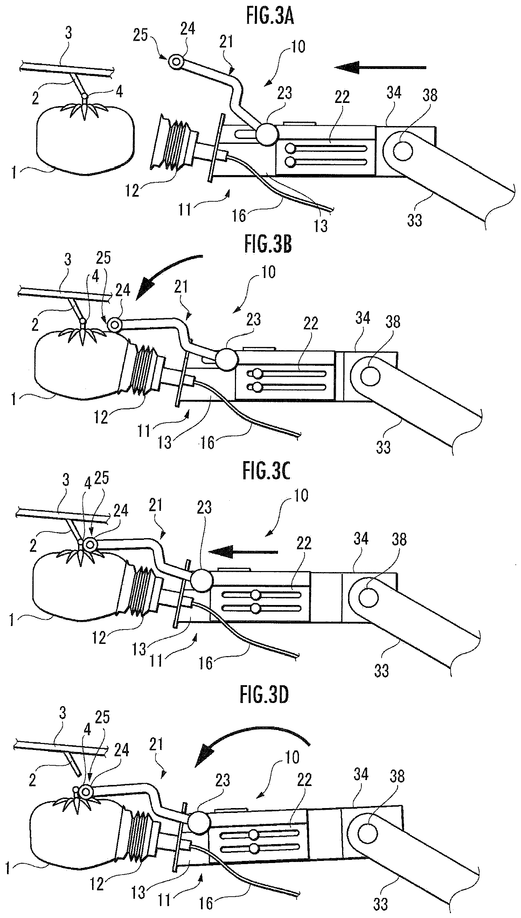

As illustrated in FIG. 3A, the recognition device 51 (see FIG. 1) recognizes the position of a recognized fruit or vegetable 1. The control unit 61 recognizes the bending direction of the pedicel 2 at its abscission zone 4 by means of the recognition device 51, and controls the movement mechanism 41 (the vehicle 42 and the robot arm 31) to cause the holding unit 12 to hold the fruit or vegetable 1 and cause the finger unit 21 to abut on the pedicel 2 in the direction opposite to the bending direction. At this time, the holding of the fruit or vegetable 1 is detectable by the sensor 53, the recognition device 51 and the like. A reaction force generated when the guide rollers 24 come into contact with the surface of the fruit or vegetable 1 and a reaction force generated when the abutting part 25 abuts on the pedicel 2 are detectable by the sensor 53, the recognition device 51, and the like. Instead of the sensor for detecting the contact and abutment, a spring or the like may be used to apply a biasing force to achieve such abutment.

As illustrated in FIG. 3B, the suction pad 15 of the holding unit 12 holds the fruit or vegetable 1. The lock mechanism 23 for locking the finger unit 21 leaves the finger unit unlocked during this time, so that the guide rollers 24 abut on the fruit or vegetable 1.

As illustrated in FIG. 3C, the movable unit 22 advances and the guide rollers 24 move on and along the surface of the fruit or vegetable 1, so that the abutting part 25 of the finger unit 21 comes into abutment on the pedicel 2. As described above, a biasing mechanism such as a spring may be used to bring the guide rollers 24 into abutment on the fruit or vegetable 1. Alternatively, a link mechanism (abutting mechanism) described later may be used. After the abutting part 25 comes into abutment on the pedicel 2, the lock mechanism 23 locks and limits the movement of the finger unit 21. The guide rollers 24 may be provided with a guide surface (not illustrated) suited for the size and shape of the fruit or vegetable 1. In this case, the guide surface can readily guide the pedicel 2 toward the abutting part 25 even if the pedicel 2 is not in place.

As illustrated in FIG. 3D, by changing the posture of the robot arm 31 to turn the harvesting hand 11 about a point near the center of the fruit or vegetable 1, the fruit or vegetable 1 is turned while the abutting part 25 of the finger unit 21 keeps the abutment on the pedicel 2, and by pressing the abutting part 25 into the pedicel 2 and/or the abscission zone 4, the fruit or vegetable 1 is separated at the abscission zone 4. During this operation, the robot arm 31 changes its posture in response to the detection of the holding and abutment so as to turn the harvesting hand 11. While the holding unit 12 holds the fruit or vegetable 1 and the abutting part 25 abuts on the pedicel 2, the robot arm 31 turns the harvesting hand 11 in the direction from the holding unit 12 toward the finger unit 21 so that the finger unit 21 presses the pedicel 2.

Another embodiment of the mechanism to move the finger unit 21 will be described below.

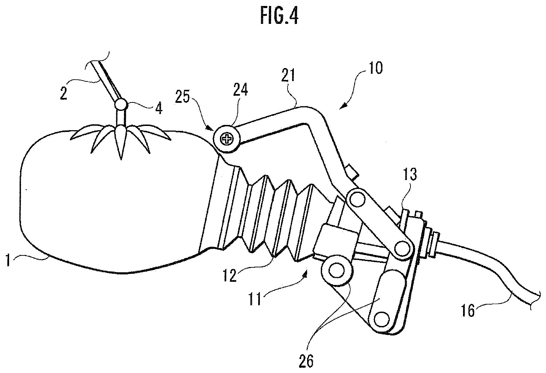

As illustrated in FIG. 4, the proximal end of the finger unit 21 is provided with a link mechanism 26 in place of the sliding-type movable unit 22 illustrated in FIG. 1. The link mechanism 26 is connected to two points of the proximal end of the finger unit 21, and brought into a movable state by the control unit 61 to move the abutting part 25 of the finger unit 21.

The link mechanism 26 is a form of the movable unit 22. The sliding-type movable unit 22 illustrated in FIG. 1 also exhibits the same effect; that is, by turning the lock mechanism 23 into the lock state while the abutting part 25 abuts on the pedicel 2 and advancing the movable unit 22, the pedicel 2 is pressed and the fruit or vegetable 1 can be separated at the abscission zone 4.

Effects of the above fruit and vegetable harvesting device 10 will be described below.

The harvesting hand 11 turns while the holding unit 12 holds a fruit or vegetable 1 and the finger unit 21 abuts on the pedicel, which achieves the state where the pedicel 2 is supported by the finger unit 21 during turning of the fruit or vegetable 1, so that the fruit or vegetable 1 is readily removed from a branch with the finger unit 21 acting as a fulcrum. Accordingly, the fruit or vegetable 1 can be harvested with a light burden on the fruit or vegetable 1 and the branch 3 (main stem) without damaging the fruit or vegetable 1.

The movable unit 22 causes the finger unit 21 to move along the fruit or vegetable and abut on the pedicel 2 even if the fruit or vegetable is affected by any disturbance, such as a change in external environment including a shake of the branch 3, which can increase so-called robustness.

The recognition device 51 recognizes the position of the fruit or vegetable 1 including the pedicel 2, and the control unit 61 causes the movement mechanism 41 to move the harvesting hand 11 toward the fruit or vegetable 1 recognized by the recognition device 51 and causes the robot arm 31 to turn the harvesting hand 11 while the holding unit 12 holds the recognized fruit or vegetable 1 and the finger unit 21 abuts on the pedicel 2, to separate the fruit or vegetable 1 from the branch. Accordingly, an operator does not need to move the harvesting hand 11 to a position where the harvesting hand 11 can hold the fruit or vegetable 1, so that a burden on the operator can be reduced.

The control unit 61 recognizes the bending direction of the pedicel 2 at the abscission zone 4 by means of the recognition device 51 and controls the movement mechanism 41 to cause the holding unit 12 to hold the fruit or vegetable 1 and cause the finger unit 21 to abut on the pedicel 2 in the direction opposite to the bending direction. This makes it easy to break the pedicel 2, which facilitates separating the fruit or vegetable 1 from the branch 3.

The fruit and vegetable harvesting device 10 is equipped with the self-propelled vehicle 42 according to the embodiment, but this is not limiting. The fruit and vegetable harvesting device 10 may alternatively be equipped with a vehicle 42 that moves in response to an operation by an operator. In addition, the fruit and vegetable harvesting device 10 is not limited to the one having respective units fully automated under control of the control unit 61, and the control unit 61 may only control the operation of the harvesting hand 11 and the turning operation of the harvesting hand 11 and the other may be controlled by an operator.

The harvesting hand 11 is moved and turned by means of the robot arm 31 according to the embodiment, but this is not limiting. For example, such a turning mechanism may be employed where the harvesting hand 11 turns by moving along a guiderail in the shape of a circular arc. In addition, the fruit and vegetable harvesting device 10 without the recognition device 51 and/or the control unit 61 also falls within the scope of the present invention.

The guide rollers 24 are provided at the distal end of the finger unit 21 according to the embodiment, but are not essential; that is, a sliding type guide which is not rotatable may alternatively be used, and the guide itself may be omitted.

Although the holding unit 12 is provided with the suction pad 15 according to the embodiment, this is not limiting; a plurality of finger-like support members may alternatively be provided to grasp a fruit or vegetable 1, and any type of holding unit 12 which can hold a fruit or vegetable 1 may be used.

The directions of the suction pad 15 and the finger unit 21 extending from the hand base 13 are the same according to the embodiment, but may be different such as orthogonal to each other.

A resilient member which biases the distal end of the finger unit 21 in the direction to press the same against the fruit or vegetable 1 may be used in addition to the lock mechanism 23.

Although the embodiment takes a tomato as an example of the fruit or vegetable 1, this is not limiting; the fruit or vegetable 1 may be any other fruit or vegetable such as an apple which is connected to a branch 3 via a pedicel 2 and can be held by the holding unit 12. The recognition device 51 is not limited to a camera for imaging, and examples thereof include any other sensors which can recognize an object such as a distance sensor, a coordinate measuring machine, and the like.

### Reference Signs List

- 1: Fruit or vegetable
- 2: Pedicel
- 3: Branch
- 4: Abscission zone
- 10: Fruit and vegetable harvesting device
- 12: Holding unit
- 13: Hand base
- 21: Finger unit
- 22: Movable unit
- 23: Lock mechanism
- 31: Robot arm
- 41: Movement mechanism
- 51: Recognition device
- 61: Control unit

## Claims

1. A fruit and vegetable harvesting device for harvesting a fruit or vegetable formed at a distal end of a pedicel, the device comprising:
a harvesting hand including a hand base, a holding unit that holds the fruit or vegetable, and a finger unit that abuts on the pedicel, the holding unit and the finger unit being supported by the hand base; and
a turning mechanism that turns the harvesting hand to cause the finger unit abutting on the pedicel to press the pedicel.

2. The fruit and vegetable harvesting device according to claim 1, wherein
the harvesting hand includes a movable unit that causes the finger unit to move along the fruit or vegetable and abut on the pedicel.

3. The fruit and vegetable harvesting device according to claim 1 or 2, further comprising:
a sensor that detects holding of the fruit or vegetable and abutment on the pedicel, wherein
the turning mechanism turns the harvesting hand in response to detection of the holding and the abutment.

4. The fruit and vegetable harvesting device according to any one of claims 1 to 3, further comprising:
a movement mechanism for moving the harvesting hand;
a recognition device that recognizes a fruit or vegetable around the harvesting hand; and
a control unit that causes the movement mechanism to move the harvesting hand toward the fruit or vegetable recognized by the recognition device, causes the holding unit to hold the recognized fruit or vegetable, causes the finger unit to abut on the pedicel, and causes the turning mechanism to turn the harvesting hand while keeping the abutment to separate the fruit or vegetable from a branch.

5. The fruit and vegetable harvesting device according to claim 4, wherein
the control unit recognizes a bending direction of the pedicel at an abscission zone of the pedicel by way of the recognition device and controls the movement mechanism to cause the finger unit to abut on the pedicel in a direction opposite to the bending direction.

6. The fruit and vegetable harvesting device according to claim 4 or 5, wherein
the finger unit includes an abutting mechanism, and the harvesting hand causes the finger unit to move in abutment with the fruit or vegetable by the abutting mechanism.
